# FASCICULE DE BREVET EUROPEEN

(11) **EP 0 608 175 B1**
(45) Date de publication et mention de la délivrance du brevet: **03.11.1999**
(21) Numéro de dépôt: 94400111.4
(22) Date de dépôt: 18.01.1994
(51) Int. Cl.: C09J 7/02

(54) **Film adhésif sensible à la pression pour la protection de matériaux et composition adhésive entrant dans sa structure**
Druckempfindlicher Schutz-Klebefilm und Klebstoff-Zusammensetzung
Protective pressure sensitive adhesive film and adhesive composition

(30) Priorité: 18.01.1993 FR 9300409
(43) Date de publication de la demande: 27.07.1994
(73) Titulaire: NOVACEL, F-76250 Deville-les-Rouen (FR)
(72) Inventeur: Anton, Patrice, F-76360 Villers Ecalles (FR); Gidel-Soto, Hélène, F-76000 Rouen (FR)
(74) Mandataire: Gillard, Marie-Louise

(56) Documents cités:
- EP-A- 0 254 002
- EP-A- 0 299 884
- EP-A- 0 460 322
- WO-A-91/06609
- DE-A- 2 523 617
- FR-A- 2 600 981
- US-A- 4 072 735

## Description

La présente invention concerne un film adhésif sensible à la pression pour la protection des surfaces organiques telles que les stratifiés, les matières plastiques, et les surfaces pré-peintes, qui comprend une couche support et une couche adhésive. Le film adhésif selon l'invention peut être avantageusement utilisé dès la fabrication de ces surfaces organiques. Notamment, il est particulièrement bien adapté à la protection des matières plastiques thermoformables. L'invention concerne également une composition adhésive utile pour la préparation d'un film adhésif sensible à la pression tel que défini ci-dessus.

De nombreux objets en feuilles ou plaques de matières plastiques (tels que baignoires, bacs de douches, cuvettes d'éviers, dômes de toiture, hublots de caravane, éléments de tableau de bord de véhicules automobiles, portes d'habitation, etc) sont obtenus par thermoformage de feuilles ou plaques de matières plastiques lisses et rigides. Il est courant de protéger lesdites feuilles ou plaques en matières plastiques avec un film de protection adhésif, qui soit facile à retirer après l'opération de thermoformage sans laisser de résidus. Les feuilles ou plaques de matières plastiques mises en oeuvre sont généralement en polyméthacrylate de méthyle (PMMA), polycarbonate (PC), polychlorure de vinyle (PVC), polyéthylènetéréphtalate (PET) ou polystyrène (PS).

On connait déjà des films de protection en polyéthylène traité suivant le procédé Corona. On connait également des films de protection constitués d'un polyéthylène revêtu d'un adhésif acrylique. A cet effet, on peut se référer aux demandes de brevet FR-A-2 635 483 et FR-A-2 635 713, qui décrivent un procédé de thermoformage de feuilles de PMMA protégées sur au moins une de leurs faces par une pellicule d'un polymère d'éthylène revêtu par un adhésif acrylique après avoir subi un traitement Corona. Cependant, les films adhésifs enduits, comme ceux décrits dans les demandes de brevet ci-dessus, laissent généralement un dépôt de résidus à la surface de la plaque ou feuille en matière plastique lorsqu'on a enlevé ledit film. De plus, le procédé d'enduction génère souvent des défauts sur la plaque ou feuille à protéger au cours des opérations de thermoformage. Enfin, le niveau adhésif des films adhésivés est étroitement dépendant du dépôt de la colle. Par ailleurs, les films traités suivant le procédé Corona ont des caractéristiques adhésives fluctuantes et difficilement maîtrisables et doivent impérativement être appliqués à chaud. En outre, les films traités suivant le procédé Corona n'adhèrent plus une fois décollés de la surface qu'ils protègent.

Il existe aussi des films adhésifs coextrudés permettant de protéger des surfaces rigides, telles que des substrats en polycarbonate, comprenant une face lisse constituée d'une couche sans adhésif, par exemple un copolymère modifié acide/acrylate, et une face embossée constituée par exemple en polyéthylène ou en polypropylène (voir en particulier la demande de brevet EP-A-0 434 180). Toutefois les films coextrudés, comme ceux décrits dans la demande de brevet ci-dessus, présentent le désavantage d'avoir de faibles niveaux adhésifs, et risquent donc de se décoller au cours de la manutention des produits qu'ils protègent.

Le certificat d'utilité français 2 600 981 décrit des films de protection auto-adhésifs constitués d'une couche thermoplastique et d'une couche adhésive comprenant une résine de base, une résine collante et un caoutchouc. Ces films présentent cependant des niveaux adhésifs trop élevés pour la protection temporaire des matières plastiques et/ou laissent des dépôts lorsqu'on les enlève des surfaces protégées.

Les films adhésifs connus jusqu'à maintenant présentent donc l'inconvénient de "polluer" les surfaces protégées, c'est-à-dire de laisser des dépôts de résidus sur ces surfaces lorsqu'on enlève lesdits films, et/ou d'avoir des niveaux adhésifs trop faibles ou trop élevés.

La Demanderesse a maintenant trouvé qu'il était possible d'obtenir des films adhésifs pour la protection de surfaces organiques ayant un niveau adhésif suffisamment élevé pour ne pas se décoller lors de la manutention des produits qu'ils protégent, et dépourvus de problèmes de "pollution de surface". Ces films adhésifs peuvent être obtenus par coextrusion d'une couche support à base de polyoléfine(s) et d'une couche adhésive spécifique. Le procédé de coextrusion est un procédé avantageux économiquement et permet d'obtenir dans le cas présent des films adhésifs à un coût de revient inférieur à celui du procédé d'enduction.

La présente invention concerne donc des films adhésifs sensibles à la pression, pour la protection de surfaces organiques, comprenant une couche support à base de polyoléfine(s) et une couche adhésive comprenant:
(i) soit un mélange d'au moins une polyoléfine spécifique et d'au moins une résine tackifiante, ci-après appelée résine ;
(ii) soit un mélange de plusieurs polyoléfines spécifiques.

Dans ce qui suit, on désignera par polyoléfine les polymères oléfiniques, les copolymères de deux oléfines ou plus et les copolymères d'au moins une oléfine et d'au moins un dérivé oléfinique.

La couche support du film adhésif selon l'invention est à base de polyoléfine(s) et a une densité comprise entre 0,910 et 0,940. Avantageusement, ladite ou lesdites polyoléfine(s) est (sont) un (des) polyéthylène(s) linéaire(s) ou radicalaire(s) de densité comprise entre 0,910 et 0,965. Par polyéthylène linéaire, on entend un copolymère d'éthylène et d'une autre oléfine, telle que par exemple butène, hexène ou octène comprenant jusqu'à 30 % en poids de ladite oléfine. De préférence, ledit polyéthylène approprié aux fins de l'invention, présente un indice de fluidité de 0,1 à 10, plus préférentiellement de 0,3 à 4.

La couche support peut être constituée soit d'une monocouche de polyoléfine(s), soit de plusieurs couches de polyoléfine(s). Avantageusement, la couche support se compose d'une couche principale revêtue sur l'une de ses faces par une couche dite couche extérieure, l'autre face étant en contact avec la couche adhésive. La couche extérieure peut elle même se composer d'une ou plusieurs couches de polyoléfine(s).

La couche principale et/ou la couche extérieure peuvent en outre contenir des additifs pour modifier leurs propriétés optiques, mécaniques ou de surface. Ainsi, on peut notamment ajouter à ces couches des agents de matage, des agents glissants, des colorants, des stabilisants U.V, des anti-oxydants, des agents anti-bloquant couramment utilisés dans ce domaine. Ces additifs sont choisis de telle sorte qu'ils ne migrent pas vers la feuille ou plaque protégée au cours de l'opération de thermoformage. La couche principale peut en outre contenir jusqu'à 15% en poids de film adhésif recyclé. Par "film adhésif recyclé" on entend les déchets de production dudit film, par exemple les lisières.

L'épaisseur de la couche support représente généralement entre 65 et 90% de l'épaisseur totale du film. Avantageusement, l'épaisseur de la couche support représente 75% de l'épaisseur totale du film. Lorsque la couche support comprend une couche principale et une couche extérieure, l'épaisseur de la couche principale représente généralement environ 50% de l'épaisseur totale du film.

La couche adhésive du film selon l'invention comprend essentiellement, comme indiqué ci-dessus :
(i) soit un mélange d'au moins une polyoléfine spécifique et d'au moins une résine tackifiante, ci-après appelée résine ;
(ii) soit un mélange de plusieurs polyoléfines spécifiques.

Les polyoléfines utilisables dans le mélange (i) sont des polymères ou copolymères adhésifs choisis parmi :
- les polyéthylènes radicalaires de densité comprise entre 0,910 et 0,940 ;
- les copolymères d'éthylène et d'une oléfine telle que par exemple butène, hexène ou octène, ci-après dénommés "polyéthylènes linéaires" ou "PE linéaires", ayant une densité comprise entre 0,890 et 0,940 et un taux de comonomères inférieur à 25% en poids. De préférence, on utilisera l'octène comme comonomère. Avantageusement, ces PE linéaires ont un faible taux en masses moléculaires inférieures à 5000. Leur polydispersité sera donc réduite. L'homme de l'art pourra notamment trouver ce type de PE linéaires dans la gamme AFFINITY® commercialisée par la société DOW CHEMICAL;
- les copolymères d'éthylène et d'acétate de vinyle, ci-après dénommés "EVA", ou d'éthylène et de dérivés acryliques, ci-après dénommés "EDA", ayant une densité comprise entre 0,890 et 0,940 et un taux de comonomères inférieur à 25% en poids ;
- les copolymères d'éthylène et de propylène, ci-après dénommés "EPM" (éthylène-propylène monomères), ayant une densité comprise entre 0,860 et 0,900 et un taux de propylène compris entre 25 et 60% en poids.

Les polyoléfines utilisables dans le mélange (ii) incluent au moins un EPM, tel que défini ci-dessus, et au moins une polyoléfine choisi parmi les EVA et les PE linéaires, tels que définis précédemment. Dans ce cas, on utilise avantageusement de 10 à 100 parties en poids d'EPM pour 100 parties en poids d'EVA et/ou de PE linéaire(s).

Les polyéthylènes radicalaires et linéaires, les EVA et les EDA utilisables dans la couche adhésive de l'invention ont avantageusement un indice de fluidité inférieur à 15, de préférence compris entre 0,7 et 4. Les EPM utilisables dans la couche adhésive de l'invention ont avantageusement une viscosité MOONEY comprise entre 20 et 70, de préférence entre 25 et 60.

Tous ces homopolymères ou copolymères sont obtenus par des techniques connues de l'homme de l'art, par exemple celles décrites dans l'ouvrage de H.F Mark, N.M Bikales et C.G Overberger : "Encyclopedia of Polymer Science and Engineering, 2nd Edition", publié chez Wiley and Sons Interscience.

Les résines utilisables dans la couche adhésive de l'invention sont les résines conventionnelles bien connues de l'homme du métier. A cet égard, il est possible de se référer aux ouvrages sur les résines tackifiantes de I. Skeist : "Hankbook of adhesives" et de Don Satas : "Handbook of pressure sensitive adhesive technology", publiés chez Van Nostrand Reinhold, lère édition, 1982. Avantageusement, la (les) résine(s) utilisable(s) dans la couche adhésive selon l'invention est (sont) choisie(s) parmi des résines de colophanes ou parmi des polymères de faible masse moléculaire (comprise entre 600 et 1600) obtenus à partir de coupes pétrolières en C₅ et/ou en C₉, qui sont ensuite totalement hydrogénés, ce qui permet d'obtenir des résines transparentes et non jaunissantes à la lumière.

Comme résine susceptible d'être utilisée dans le cadre de l'invention, on peut citer les résines ESCOREZ® 5000 et ESCOREZ® 6000, commercialisées par la société EXXON, la résine ZONARES® commercialisée par la société ARIZONA ou bien encore la résine ARKON® commercialisée par la société ARAKAWA.

Le taux de résine contenu dans la couche adhésive selon l'invention est généralement inférieur ou égal à 15 % en poids par rapport au poids de la (des) polyoléfine(s). De préférence, on utilisera de 5 à 15 parties en poids de résine pour 100 parties en poids de polyoléfine(s).

La couche adhésive de l'invention peut en outre contenir au moins un agent anti-bloquant et/ou au moins un agent plastifiant afin d'améliorer la souplesse du film adhésif obtenu. Comme agent anti-bloquant, on peut utiliser un tensio-actif non-ionique ou anionique, tel que par exemple le nonylphénol ou les sulfosuccinates. Comme agent plastifiant, on utilisera de préférence des polymères de faible masse moléculaire (inférieure à 1000), tels que par exemple une paraffine liquide, ou bien un polyéthylène très basse densité (d < 0,9), tel que par exemple le polyéthylène TAFMER® commercialisé par la société MITSUI.

La teneur en agent anti-bloquant est avantageusement inférieure ou égale à 10 % en poids par rapport au poids de polyoléfine(s). De préférence, on utilisera 1 à 10, de préférence de 1 à 5 parties en poids d'agent anti-bloquant pour 100 parties en poids de polyoléfine(s).

La teneur en agent plastifiant est avantageusement inférieure ou égale à 30 % en poids par rapport au poids de polyoléfine(s). De préférence, on utilisera de 1 à 30, de préférence de 1 à 20 parties en poids d'agent plastifiant pour 100 parties en poids de polyoléfine(s).

La présente invention concerne également une composition adhésive utilisée pour préparer le film adhésif de l'invention, qui comprend essentiellement :
(i) soit un mélange d'au moins une polyoléfine choisie parmi les polyéthylènes radicalaires de densité comprise entre 0,910 et 0,940; les polyéthylènes linéaires, les EVA et les EDA ayant une densité comprise entre 0,890 et 0,940 et un taux de comonomères inférieur à 25 % ; et les EPM ayant une densité comprise entre 0,860 et 0,900 et un taux de propylène compris entre 25 et 60 %, et d'au moins une résine tackifiante ;
(ii) soit un mélange d'au moins une polyoléfine choisie parmi les polyéthylènes linéaires et les EVA ayant une densité comprise entre 0,890 et 0,940 et un taux de comonomères inférieur à 25 %; et d'au moins un EPM ayant un taux de propylène compris entre 25 et 60 % et une densité comprise entre 0,860 et 0,900.

Les constituants de ces mélanges, polyoléfine(s) et résine(s) tackifiante(s), sont tels que définis précédemment en référence au film adhésif.

Les films de protection adhésifs de l'invention peuvent être obtenus par exemple par coextrusion de la couche support et de la couche adhésive. On peut employer indifférement la méthode de coextrusion "cast" ou de coextrusion soufflage (blown), techniques bien connues de l'homme de l'art, et détaillées par exemple dans l'ouvrage de référence de J.F Agassant, P. Avenas et J.P Sergent : "La mise en forme des matières plastiques ", publié chez Lavoisier, 2ème édition, 1989.

Les films adhésifs selon l'invention présentent un niveau adhésif, déterminé selon la norme AFERA 4001, compris entre 10 et 50 cN/cm, et peuvent être retirés des matériaux sur lesquels ils sont appliqués sans difficulté et sans laisser de résidus.

Les films adhésifs selon l'invention peuvent être utilisés notamment pour la protection de plaques de matières plastiques thermoformables, comme par exemple des plaques de polyméthacrylate de méthyle, de polycarbonate, de polychlorure de vinyle, de polyéthylènetéréphtalate ou de polystyrène.

L'invention sera mieux comprise à l'aide des exemples ci-après donnés à titre purement illustratif.

### Exemple 1

On a préparé une composition adhésive en mélangeant 100 parties en poids d'un copolymère d'éthylène et d'acétate de vinyle ayant une teneur en acétate de vinyle de 7 % et un indice de fluidité égal à 2 avec 14 parties en poids d'une résine tackifiante ayant un point de ramollissement de 115°C obtenue à partir d'une coupe pétrolière en C₅.

Sur un équipement de coextrusion deux couches possédant deux extrudeuses, on introduit dans l'extrudeuse n°1 un polyéthylène radicalaire de densité 0,920 et d'indice de fluidité 0,7 (couche support) et dans l'extrudeuse n°2 la composition adhésive préparée ci-dessus.

Par coextrusion soufflage dans les conditions normales connues de l'homme de l'art, on a obtenu un film adhésif de protection.

Ce film, appliqué sur une plaque de PMMA, présente un niveau adhésif, déterminé selon la norme AFERA 4001, de 10 à 20 cN/cm avant l'opération de thermoformage de ladite plaque. Cette valeur n'augmente pas après le thermoformage.

### Exemple 2

On a préparé une composition adhésive en mélangeant 100 parties en poids d'un PE linéaire dont le comonomère est de l'octène, de densité 0,920 et d'indice de fluidité 4, avec 7 parties en poids d'une résine tackifiante ayant un point de ramollissement de 115°C obtenue à partir d'une coupe pétrolière en C₅.

Sur un équipement de coextrusion trois couches possédant trois extrudeuses, on introduit dans l'extrudeuse n° 1 un polyéthylène linéaire de densité 0,935 et d'indice de fluidité 2 (couche centrale), dans l'extrudeuse n° 2 un polyéthylène radicalaire de densité 0,920 et d'indice de fluidité 2 (couche extérieure) et dans l'extrudeuse n° 3 la composition adhésive préparée ci-dessus.

Par coextrusion "cast" dans les conditions normales connues de l'homme de l'art, on a obtenu un film adhésif de protection

Ce film, appliqué sur une plaque de PMMA, présente un niveau adhésif, déterminé selon la norme AFERA 4001, de 15 à 20 cN/cm avant l'opération de thermoformage de ladite plaque. Cette valeur n'augmente pas après le thermoformage.

### Exemple 3

On a préparé une composition adhésive en mélangeant 100 parties en poids d'un PE linéaire dont le comonomère est l'octène, de densité 0,913 et d'indice de fluidité 3,3, avec 10 parties en poids d'un EPM de densité 0,860 et de viscosité MOONEY 33.

Sur un équipement de coextrusion deux couches possédant deux extrudeuses, on introduit dans l'extrudeuse n° 1 un polyéthylène radicalaire de densité 0,920 et d'indice de fluidité 0,7 (couche support) et dans l'extrudeuse n° 2 la composition adhésive préparée ci-dessus.

Par coextrusion soufflage dans les conditions normales connues de l'homme de l'art, on a obtenu un film adhésif.

Ce film, appliqué sur une plaque de PMMA, présente un niveau adhésif, déterminé selon la norme AFERA 4001, de 10 à 20 cN/cm avant l'opération de thermoformage de ladite plaque. Cette valeur n'augmente pas après le thermoformage.

### Exemple 4

On a préparé une composition adhésive en mélangeant 100 parties en poids d'un EVA ayant une teneur en acétate de vinyle de 7% et un indice de fluidité de 2, avec 100 parties en poids d'un EPM de densité 0,860 et de viscosité MOONEY 33.

Sur un équipement de coextrusion deux couches possédant deux extrudeuses, on introduit dans l'extrudeuse n° 1 un polyéthylène radicalaire de densité 0,920 et d'indice de fluidité 0,7 (couche support) et dans l'extrudeuse n° 2 la composition adhésive préparée ci-dessus.

Par coextrusion soufflage dans les conditions normales connues de l'homme de l'art, on a obtenu un film adhésif.

Ce film, appliqué sur une plaque de PMMA, présente un niveau adhésif, déterminé selon la norme AFERA 4001, de 10 à 20 cN/cm avant l'opération de thermoformage de ladite plaque. Cette valeur n'augmente pas après le thermoformage.

### Exemple 5

De la même façon, on prépare des compositions adhésives en mélangeant, dans les proportions (% en poids) indiquées dans le tableau 1 ci-après, les composés suivants :
- PE linéaire (comonomère = octène, d = 0,912-0,915, indice de fluidité = 2-4) ;
- EVA (taux d'acétate de vinyle = 7%, indice de fluidité = 2) ;
- EPM (densité 0,86, viscosité MOONEY = 33) ; et
- résine tackifiante (point de ramollissement de 115°C obtenue à partir d'une coupe pétrolière en C₅).

**TABLEAU 1**

| | | | | | | | |
|---|---|---|---|---|---|---|---|
| **PE linéaire** | 50 | 30 | 50 | 40 | 40 | | |
| **EVA** | 45 | 60 | | | | 40 | 60 |
| **Résine** | 5 | 10 | 10 | 10 | 5 | 5 | 10 |
| **EPM** | | | 40 | 50 | 55 | 55 | 30 |

## Revendications

1. Composition adhésive qui comprend essentiellement un mélange d'au moins une polyoléfine choisie parmi les polyéthylènes radicalaires de densité comprise entre 0,910 et 0,940 ; les polyéthylènes linéaires, les copolymères d'éthylène et d'acétate de vinyle (EVA) et les copolymères d'éthylène et de dérivés acryliques (EDA) ayant une densité comprise entre 0,890 et 0,940 et un taux de comonomères inférieur a 25 % en poids; et les EPM ayant une densité comprise entre 0,860 et 0,900 et un taux de propylène compris entre 25 et 60 % en poids, et d'au moins une résine tackifiante, ladite composition ne comprenant pas de polybutylène ou de produit d'oxydation de copolymère éthylène-propylène contenant 30 à 60 % en poids de propylène.

2. Composition adhésive selon la revendication 1, qui comprend essentiellement un mélange d'un polyéthylène linéaire, EVA ou EDA ayant une densité comprise entre 0,890 et 0,940 et un taux de comonomère inférieur à 25 % en poids et d'une résine tackifiante.

3. Composition adhésive qui comprend essentiellement un mélange d'au moins une polyoléfine choisie parmi les polyéthylènes linéaires et les EVA ayant une densité comprise entre 0,890 et 0,940 et un taux de comonomères inférieur à 25 % en poids; et d'au moins un EPM ayant un taux de propylène compris entre 25 et 60 % en poids et une densité comprise entre 0,860 et 0,900.

4. Composition adhésive selon l'une quelconque des revendications 1 à 3, caractérisée en ce que le comonomère du polyéthylène linéaire est l'octène.

5. Composition adhésive selon la revendication 1 ou 3, caractérisée en ce que les EPM ont une viscosité MOONEY comprise entre 20 et 70 et en ce que les autres polyoléfines ont un indice de fluidité inférieur à 15, de préférence compris entre 0,7 et 4.

6. Composition adhésive selon l'une des revendications 1, 2 ou 4, caractérisée en ce qu'elle comprend au plus 15 % en poids de résine(s) tackifiante(s) par rapport au poids de la (des) polyoléfine(s).

7. Composition adhésive selon la revendication 6, caractérisée en ce qu'elle comprend de 5 à 15 parties en poids de résine(s) tackifiante(s) pour 100 parties en poids de polyoléfine(s).

8. Composition adhésive selon l'une quelconque des revendications 1 à 7, caractérisée en ce qu'elle comprend en outre au moins un agent anti-bloquant et/ou au moins un agent plastifiant.

9. Composition adhésive selon la revendication 8, caractérisée en ce qu'elle comprend de 1 à 10 parties en poids d'agent anti-bloquant et/ou de 1 à 30 parties en poids d'agent plastifiant pour 100 parties en poids de polyoléfine.

10. Film adhésif sensible à la pression, comprenant une couche support à base de polyoléfine(s) et une couche adhésive, caractérisé en ce que la couche support a une densité comprise entre 0,910 et 0,940 et en ce que la couche adhésive est constituée de la composition adhésive selon l'une quelconque des revendications 1 à 9.

11. Film selon la revendication 10, caractérisé en ce que la couche support est constituée de polyéthylène(s) radicalaire(s) ou linéaire(s) d'indice de fluidité compris entre 0,1 et 10.

12. Film selon la revendication 10 ou 11, caractérisé en ce que l'épaisseur de la couche support représente entre 65 et 90% de l'épaisseur totale du film.

13. Film selon l'une quelconque des revendications 10 à 12, caractérisé en ce que la couche support comprend une couche principale et une couche extérieure.

14. Film selon la revendication 13, caractérisé en ce que l'épaisseur de la couche principale représente environ 50 % de l'épaisseur totale du film.

## Patentansprüche

1. Klebstoffzusammensetzung, umfassend im Wesentlichen eine Mischung zumindest eines Polyolefins ausgewählt aus radikalen Polyethylenen mit einer Dichte zwischen 0,910 und 0,940, linearen Polyethylenen, Copolymeren von Ethylen und Vinylacetat (EVA) und Copolymeren von Ethylen und acyclischen Derivaten (EDA) mit einer Dichte zwischen 0,890 und 0,940 und einem Comonomer-Gehalt unter 25 Gewichtsprozent und EPM mit einer Dichte zwischen 0,860 und 0,900 und einem Propylen-Gehalt zwischen 25 und 60 Gewichtsprozent und zumindest ein Tackifier-Harz, wobei die Zusammensetzung kein Polybutylen oder Oxidationsprodukt eines Ethylen-Propylen-Copolymers mit 30 bis 60 Gewichtsprozent Propylen aufweist.

2. Klebstoffzusammensetzung nach Anspruch 1, umfassend im Wesentlichen eine Mischung eines linearen Polyethylens, EVA oder EDA mit einer Dichte zwischen 0,890 und 0,940 und einem Comonomergehalt unter 25 Gewichtsprozent und ein Tackifier-Harz.

3. Klebstoffzusammensetzung, umfassend im Wesentlichen eine Mischung zumindest eines Polyolefins, ausgewählt aus linearen Polyethylenen und EVA mit einer Dichte zwischen 0,890 und 0,940 und einem Comonomergehalt unter 25 Gewichtsprozent und zumindest ein EPM mit einem Propylengehalt zwischen 25 und 60 Gewichtsprozent und einer Dichte zwischen 0,860 und 0,900.

4. Klebstoffzusammensetzung nach einem der Ansprüche 1 bis 3, dadurch gekennzeichnet, dass das lineare Polyethylen-Comonomer Octen ist.

5. Klebstoffzusammensetzung nach Anspruch 1 oder 3, dadurch gekennzeichnet, dass die EPM eine MOONEY-Viskosität zwischen 20 und 70 aufweisen, und dass die anderen Polyolefine eine Fließzahl unter 15, vorzugsweise zwischen 0,7 und 4, aufweisen.

6. Klebstoffzusammensetzung nach einem der Ansprüche 1, 2 oder 4, dadurch gekennzeichnet, dass sie höchstens 15 Gewichtsprozent Tackifier-Harz(e), bezogen auf das Gewicht des (der) Polyolefins (Polyolefine) umfasst.

7. Klebstoffzusammensetzung nach Anspruch 6, dadurch gekennzeichnet, dass sie 5 bis 15 Gewichtsteile Tackifier-Harz(e) pro 100 Gewichtsteile Polyolefin(e) umfasst.

8. Klebstoffzusammensetzung nach einem der Ansprüche 1 bis 7, dadurch gekennzeichnet, dass sie weiters zumindest ein Anti-Blockieragens und/oder zumindest ein Plastifizieragens umfasst.

9. Klebstoffzusammensetzung nach Anspruch 8, dadurch gekennzeichnet, dass sie 1 bis 10 Gewichtsteile Anti-Blockieragens und/oder 1 bis 30 Gewichtsteile Plastifizieragens pro 100 Gewichtsteile Polyolefin umfasst.

10. Druckempfindlicher Klebefilm umfassend eine Trägerschicht auf der Basis von Polyolefin(en) und eine Klebstoffschicht, dadurch gekennzeichnet, dass die Trägerschicht eine Dichte zwischen 0,910 und 0,940 aufweist und dass die Klebstoffschicht aus der Klebstoffzusammensetzung nach einem der Ansprüche 1 bis 9 gebildet ist.

11. Film nach Anspruch 10, dadurch gekennzeichnet, dass die Trägerschicht aus radikalem (radikalen) oder linearem (linearen) Polyethylen(en) mit einer Fließzahl zwischen 0,1 und 10 gebildet ist.

12. Film nach Anspruch 10 oder 11, dadurch gekennzeichnet, dass die Dicke der Trägerschicht zwischen 65 und 90% der Gesamtdicke des Films darstellt.

13. Film nach einem der Ansprüche 10 bis 12, dadurch gekennzeichnet, dass die Trägerschicht eine Hauptschicht und eine äußere Schicht umfasst.

14. Film nach Anspruch 13, dadurch gekennzeichnet, dass die Dicke der Hauptschicht ungefähr 50% der Gesamtdicke des Films darstellt.

## Claims

1. Adhesive composition which comprises essentially a mixture of at least one polyolefin selected from free-radical polyethylenes with a density of between 0.910 and 0.940, linear polyethylenes, copolymers of ethylene and vinyl acetate (EVA) and copolymers of ethylene and acrylic derivatives (EDA) with a density of between 0.890 and 0.940 and a comonomer content of less than 25% by weight, and EPM with a density of between 0.860 and 0.900 and a propylene content of between 25 and 60% by weight, and at least one tackifying resin, said composition not comprising any polybutylene or any oxidation product of an ethylene/propylene copolymer containing 30 to 60% by weight of propylene.

2. Adhesive composition according to Claim I which comprises essentially a mixture of a linear polyethylene, EVA or EDA with a density of between 0.890 and 0.940 and a comonomer content of less than 25% by weight, and a tackifying resin.

3. Adhesive composition which comprises essentially a mixture of at least one polyolefin selected from linear polyethylenes and EVA with a density of between 0.890 and 0.940 and a comonomer content of less than 25% by weight, and at least one EPM with a propylene content of between 25 and 60% by weight and a density of between 0.860 and 0.900.

4. Adhesive composition according to any one of Claims 1 to 3, characterized in that the comonomer of the linear polyethylene is octene.

5. Adhesive composition according to Claim 1 or 3, characterized in that the EPM have a MOONEY viscosity of between 20 and 70 and in that the other polyolefins have a melt flow index of less than 15 and preferably of between 0.7 and 4.

6. Adhesive composition according to one of Claims 1, 2 or 4, characterized in that it comprises at most 15% by weight of tackifying resin(s), based on the weight of polyolefin(s).

7. Adhesive composition according to Claim 6, characterized in that it comprises from 5 to 15 parts by weight of tackifying resin(s) per 100 parts by weight of polyolefin(s).

8. Adhesive composition according to any one of Claims 1 to 7, characterized in that it also comprises at least one antiblocking agent and/or at least one plasticizer.

9. Adhesive composition according to Claim 8, characterized in that it comprises from 1 to 10 parts by weight of antiblocking agent and/or from 1 to 30 parts by weight of plasticizer per 100 parts by weight of polyolefin.

10. Pressure-sensitive adhesive film comprising a support layer based on polyolefin(s) and an adhesive layer, characterized in that the support layer has a density of between 0.910 and 0.940 and in that the adhesive layer consists of the adhesive composition according to any one of Claims 1 to 9.

11. Film according to Claim 10, characterized in that the support layer consists of free-radical or linear polyethylene(s) with a melt flow index of between 0.1 and 10.

12. Film according to Claim 10 or 11, characterized in that the thickness of the support layer represents between 65 and 90% of the total thickness of the film.

13. Film according to any one of Claims 10 to 12, characterized in that the support layer comprises a principal layer and an outer layer.

14. Film according to Claim 13, characterized in that the thickness of the principal layer represents about 50% of the total thickness of the film.
